# FASCICULE DE BREVET EUROPEEN

(11) **EP 0 574 289 B1**
(45) Date de publication et mention de la délivrance du brevet: **20.11.1996**
(21) Numéro de dépôt: 93401392.1
(22) Date de dépôt: 01.06.1993
(51) Int. Cl.: F16H 3/093, F16H 3/091, F16H 37/04

(54) **Boîte de vitesse pour véhicule à propulsion avant et moteur transversal permettant d'accroître ses capacités de franchissement**
Getriebe für Fahrzeug mit Frontantrieb und querliegendem Motor mit erhöhter Bodenfreiheit
Ground clearance in creasing gearbox for fore wheel drive, transversal engine, vehicles

(30) Priorité: 09.06.1992 FR 9206917
(43) Date de publication de la demande: 15.12.1993
(73) Titulaire: Dangel, Henry, F-68100 Mulhouse (FR)
(72) Inventeur: Dangel, Henry, F-68100 Mulhouse (FR)
(74) Mandataire: Martin, Jean-Paul

(56) Documents cités:
- EP-A- 0 034 814
- GB-A- 1 178 244
- GB-A- 2 112 088
- US-A- 4 738 150

## Description

La présente invention a pour objet une boîte de vitesses pour véhicule à propulsion avant équipée d'un moteur du type conforme à la revendication 1.

Plus précisément, l'invention concerne une boîte de vitesses pour véhicule du type dit "tous chemins", dérivé, comme on le sait, d'un véhicule de série et équipé de dispositifs de motorisation de l'essieu habituellement libre. Ces dispositifs de motorisation accroissent la capacité de franchissement du véhicule en terrain difficile.

On connaît par le GB-A-1 178 244 une boîte de vitesses comprenant
- un arbre principal portant des pignons et correspondant aux différentes vitesses, lequel arbre principal est creux,
- un arbre de sortie sur lequel sont montés fous des pignons toujours en prise avec les pignons de l'arbre principal, ainsi que des synchroniseurs permettant de solidariser l'un de ces pignons avec l'arbre de sortie, un réducteur à au moins deux pignons montés fous sur un arbre secondaire parallèle à l'arbre principal, en prise avec des pignons associés de l'arbre principal suivant des rapports différents correspondant à des gammes de vitesses différentes, et un synchroniseur interposé entre ces pignons sur l'arbre secondaire pour pouvoir solidariser l'un ou l'autre avec l'arbre secondaire et ainsi entraîner le pignon correspondant de l'arbre principal, et
- un arbre d'entrée moteur portant à son extrémité un moyeu terminal en prise avec un moyeu d'entrée solidaire en rotation de l'arbre secondaire.

L'invention a pour but de réaliser une boîte de vitesses permettant de disposer d'une seconde gamme de vitesses réduites, au moins sur le pont avant du véhicule, et le cas échéant sur son pont arrière lorsque la prise de mouvement du pont arrière est également enclenchée afin de rendre les quatre roues motrices. Cette seconde gamme de vitesses réduites peut éviter au véhicule de rester immobilisé sur un terrain difficile, par exemple boueux, ou encore de griller l'embrayage.

Conformément à l'invention, la boîte de vitesses comprend les caractéristiques mentionnées à la partie caractérisante de la revendication 1.

Le mouvement est transmis par l'arbre secondaire et ses pignons aux pignons de l'arbre principal et de là, comme dans les boîtes de vitesses classiques, à l'arbre de sortie et au pont avant.

L'agencement du réducteur et de la transmission entre l'arbre principal et celui-ci peut être tel que l'un des pignons transmet le mouvement à l'arbre principal suivant un rapport voisin de l'unité tandis que le second transmet le mouvement avec un rapport sensiblement inférieur. Le premier pignon correspond alors à la gamme de vitesses normales, tandis que le second correspond à la gamme de vitesses réduites, pouvant être utilisée pour extraire le véhicule d'un terrain particulièrement difficile.

L'engrenage constitué par le pignon terminal et la roue dentée entraîne l'arbre secondaire et ses pignons, dont les rapports de transmission avec les pignons correspondants de l'arbre principal sont adaptés au rapport de transmission dudit engrenage afin d'obtenir les rapports souhaités.

La boîte de vitesses selon l'invention ne nécessite que quelques pièces spécifiques et la modification de certaines pièces connues, et peut donc être réalisée avec un coût réduit à partir d'une boîte de vitesses classique. De plus l'adjonction du réducteur peut se faire dans une zone où il subsiste un espace utilisable, latéralement au groupe moteur, et ce sans accroissement important de l'encombrement total.

L'invention sera maintenant décrite en référence aux dessins annexés qui en illustre une forme de réalisation à titre d'exemple non limitatif.

La figure 1 est une vue en perspective d'une transmission et du groupe moteur transversal d'un véhicule à propulsion avant, auquel peut être appliquée l'invention.

La figure 2 est une vue mi-coupe axiale, mi-élévation suivant 2/2 de la Fig.3 d'une forme de réalisation de la boîte de vitesses selon l'invention.

La figure 3 est une vue en élévation latérale suivant la flèche A de la Fig.2, le carter et un pignon de la boîte de vitesses étant enlevés.

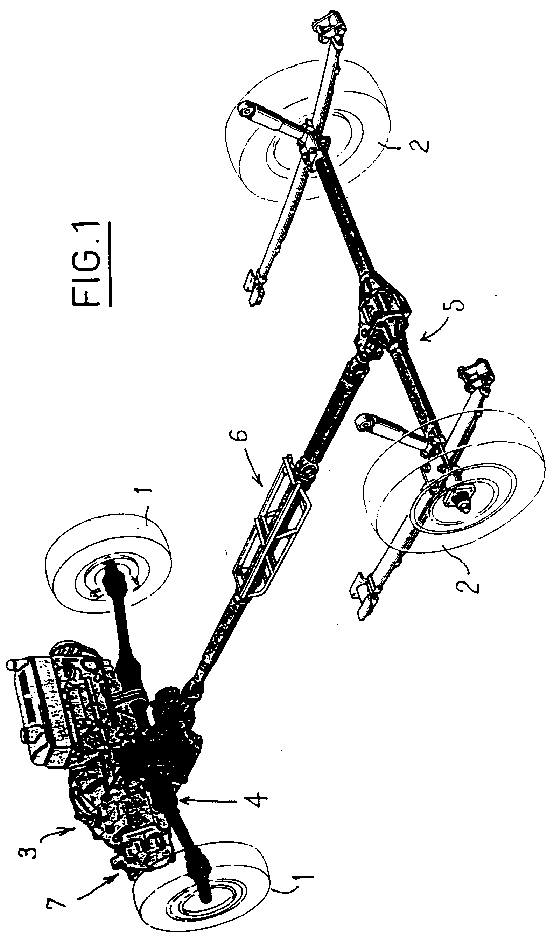

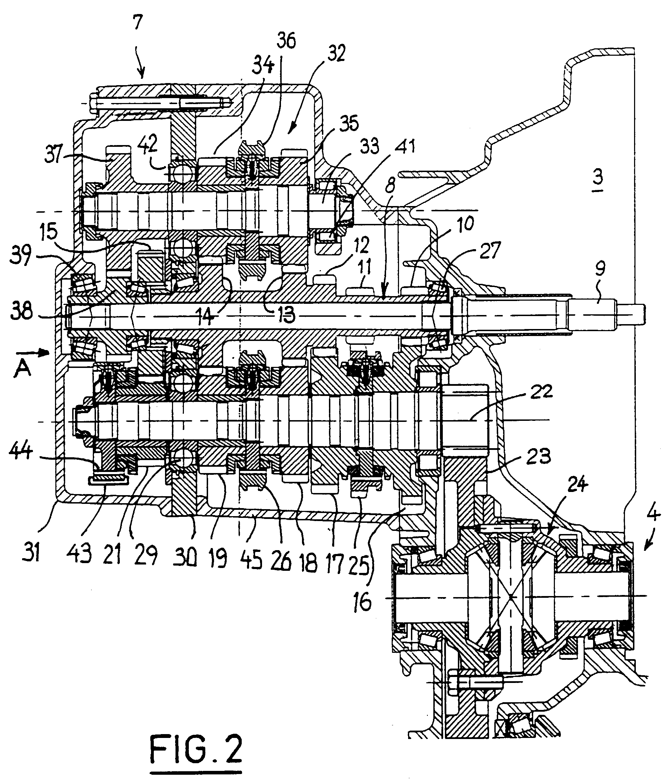

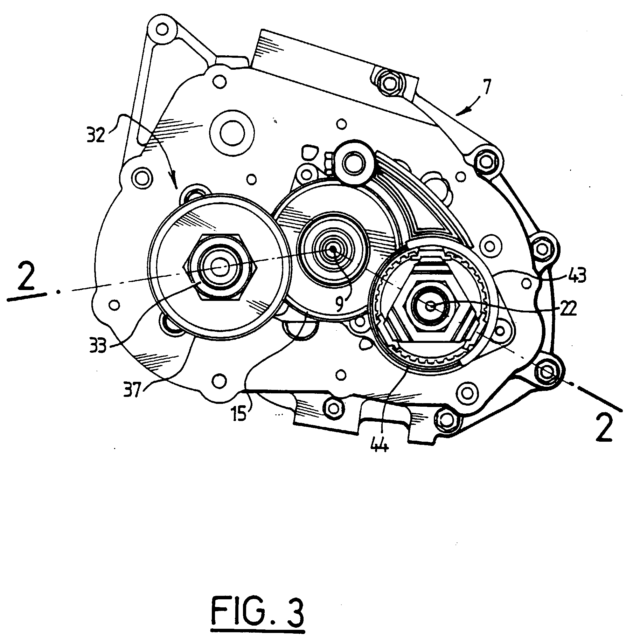

On voit à la Fig.1 le système de transmission d'un véhicule à quatre roues 1, 2, groupe moteur transversal 3, pont avant 4, pont arrière 5, et arbre longitudinal 6. La transmission de ce véhicule, à propulsion avant, et dont le pont arrière 5 peut être motorisé, peut avantageusement comporter une boîte de vitesses 7 conforme à l'invention, et dont un mode de réalisation sera décrit en référence aux Fig.2 et 3.

La boîte de vitesses 7 comprend un arbre principal 8 creux, qui contient un arbre d'entrée 9 relié au moteur 3 par lequel il peut être entraîné en rotation, et qui est librement rotatif par rapport à l'arbre creux 8. Ce dernier comporte une série de pignons 10... 15 constamment en prise avec des pignons correspondants 16, 17, 18, 19, 21, montés fous sur un arbre de sortie 22 parallèle aux arbres 8 et 9. L'arbre de sortie 22 engrène avec une couronne 23 coopérant, de manière connue, avec un différentiel 24 monté à une extrémité du pont avant 4. Au-delà du différentiel 24 est montée une prise de mouvement non représentée, connue en soi, permettant de motoriser l'essieu arrière afin de rendre les quatre roues motrices.

Les pignons fous 16, 17, 18, 19, 21 correspondent respectivement aux première, deuxième, troisième, quatrième et cinquième vitesses. Des synchroniseurs 25 26, et 44 sont montés, de façon connue, respectivement entre les pignons 16, 17 de première et de seconde, et les pignons 18, 19 de troisième et de quatrième, le synchroniseur 44 étant accolé au pignon de cinquième. Ces synchroniseurs comportent des fourchettes qui, de manière connue, peuvent coopérer avec l'un des pignons associés afin de le solidariser avec l'arbre 22, ce qui permet d'utiliser l'ensemble de la transmission à la vitesse choisie.

L'arbre principal 8 est équipé de plusieurs roulements à rouleaux tels que 27, 39 tandis que l'arbre de sortie 22 traverse un roulement à billes 29 qui lui-même prend appui sur une plaque entretoise 30 séparant le carter 31 d'un carter 45 d'embrayage. De même les roulements 27, 39 s'appuient respectivement sur les carters 45 et 31.

La boîte 7 comporte un réducteur 32 qui comprend un arbre secondaire 33 parallèle à l'arbre 9 et disposé, par rapport à celui-ci, du côté opposé à l'arbre de sortie 22. Deux pignons 34, 35 sont montés fous sur l'arbre 33 et en prise respectivement avec les pignons 14 et 13 de l'arbre principal 8. Un synchroniseur 36 placé entre les pignons 34 et 35 permet, de manière connue en soi, de solidariser tour à tour l'un de ces pignons avec l'arbre 33, complémentairement équipé d'un pignon d'entrée 37. Ce dernier est solidaire en rotation de l'arbre 33 et en prise avec un pignon terminal 38 monté sur l'arbre d'entrée 9 et mécaniquement solidaire de celui-ci.

Le pignon 38 comporte un moyeu engagé dans le roulement 39. L'arbre 33 est monté dans des roulements 41 et 42, respectivement à rouleaux et à billes dans l'exemple représenté, qui eux-mêmes prennent appui sur le carter 31.

La présence du pignon 38 de liaison entre l'arbre d'entrée 9 et l'arbre 33 du réducteur 32, réduit le volume disponible pour la fourchette du synchroniseur 44 du pignon 21 de la cinquième vitesse. Ce synchroniseur 44 est donc équipé d'une fourchette 43 modifiée par rapport à une fourchette classique (non représentée) associée à un synchroniseur tel que 25 ou 26. En effet la fourchette 43 présente une section profilée en U, de manière à envelopper le synchroniseur correspondant 44, ce qui permet d'actionner celui-ci dans le volume disponible réduit.

Le fonctionnement de la boîte de vitesses qui vient d'être décrite est le suivant :

L'arbre d'entrée 9 entraîné en rotation par le moteur 3 entraîne lui-même en rotation son pignon 38 qui entraîne le pignon d'entrée 37 du réducteur 32. Le pignon 37 entraîne à son tour en rotation l'arbre 33, et la commande du synchroniseur 36 permet de solidariser au choix le pignon 34 ou le pignon 35 en rotation avec l'arbre 33. Le pignon 34 ou 35 entraîne à son tour l'arbre principal 8 avec une vitesse de rotation qui dépend de la vitesse choisie (pignon 14 de la quatrième vitesse, entraîné par le pignon 34, ou pignon 13 de la troisième vitesse, entraîné par le pignon 35). Les rapports de transmission des pignons 34, 35 aux pignons respectifs 14, 13 sont différents : le rapport des pignons 35 et 13 peut être choisi afin d'être l'inverse ou sensiblement l'inverse du rapport des pignons 38 et 37, afin que la somme de ces deux rapports soit voisine de 1. Dans ce cas l'arbre 8, entraîné par le pignon 35, tourne pratiquement à la même vitesse que celle qu'il aurait en l'absence du réducteur 32. Par contre, le rapport des pignons 34 et 14 est choisi de manière que compte tenu de celui des pignons 38 et 37, l'arbre 8 entraîné par les pignons 34 et 14 tourne à une vitesse réduite par rapport à sa vitesse d'entraînement par les pignons 35 et 13.

Ainsi, lorsque le synchroniseur 36 solidarise le pignon 35 en rotation avec l'arbre 33, la boîte de vitesses 7 peut fonctionner avec une gamme de vitesses normales. En revanche, si le véhicule est engagé sur un terrain difficile par exemple très pentu, ou caillouteux, ou boueux, dont il ne peut s'extraire avec la gamme de vitesses normales, ou bien en risquant de mettre l'embrayage hors service, le conducteur enclenche, de manière connue en soi et non représentée, le synchroniseur 36 sur le pignon 34. L'arbre principal 8 est alors entraîné en rotation par les pignons 34 et 14 à une vitesse réduite. Il en est de même par conséquent de l'arbre de sortie 22 en fonction de la vitesse choisie par le conducteur, et donc des roues 1 du pont avant 4. Bien entendu le conducteur peut utiliser la prise de mouvement arrière pour rendre également motrices les roues arrière 2, qui tourneront aussi à vitesse réduite.

Le tableau ci-dessous fournit un exemple numérique non limitatif des rapports utilisables dans la boîte de vitesses 7 selon l'invention. Les parties de gauche correspondent à une boîte de vitesses classique sans réducteur, tandis que les parties de droite correspondent à une boîte de vitesses équipée du réducteur 32 selon l'invention. Dans cet exemple, le rapport de l'engrenage 38/37 est égal à 24/37, le rapport de la gamme longue (pignons 35-13) est 35/28, et le rapport de la gamme courte (pignons 34-14) est 30/34.

L'invention permet d'obtenir les avantages techniques mentionnés sans accroître de manière notable l'encombrement de la boîte de vitesses. En effet la partie des carters 31 et 45 nécessaire pour loger le réducteur 32 est de volume réduit et peut être logée dans l'espace disponible sous le capot. Il convient de plus de noter que la réalisation de la boîte de vitesses selon l'invention ne nécessite la fabrication que d'un faible nombre de pièces spécifiques ou modifiées (arbres 8 et 9, pignons 38 et 37, carters 31 et 45, fourchette 43), les autres éléments de la boîte étant ceux disponibles dans le commerce. Il en résulte que le coût de fabrication de cette boîte de vitesses est peu élevé.

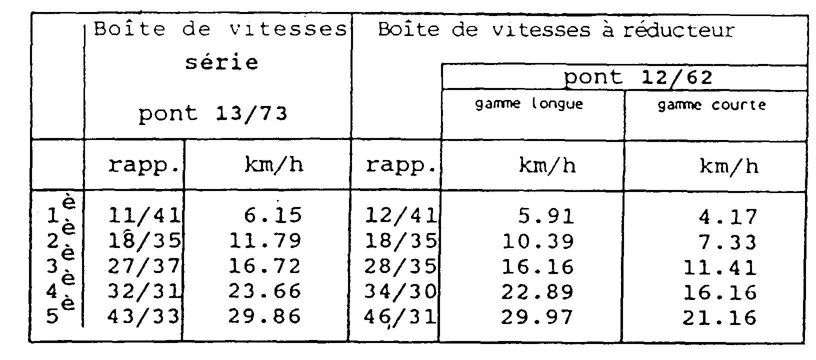

Le réducteur 32 peut être équipé de plus de deux pignons 34, 35, par exemple trois, ce qui permettrait l'obtention de trois gammes de vitesses au lieu de deux. De même, il est possible en variante, de remplacer le synchroniseur 44 et sa fourchette 43 en U par un synchroniseur et une fourchette classiques, mais de dimensions réduites compte tenu du volume disponible.

## Revendications

1. Boîte de vitesses (7) pour véhicule à propulsion avant équipée d'un moteur, comprenant
- un arbre principal (8) portant des pignons (10-15) et correspondant aux différentes vitesses, lequel arbre principal est creux,
- un arbre de sortie (22) sur lequel sont montés fous des pignons (16-19, 21) toujours en prise avec les pignons de l'arbre principal, ainsi que des synchroniseurs (25, 26, 44) permettant de solidariser l'un de ces pignons avec l'arbre de sortie,
- un réducteur (32) à au moins deux pignons (34, 35) montés fous sur un arbre secondaire (33) parallèle à l'arbre principal (8), en prise avec des pignons associés (14, 13) de l'arbre principal (8) suivant des rapports différents correspondant à des gammes de vitesses différentes, et un synchroniseur (36) interposé entre ces pignons (34, 35) sur l'arbre secondaire pour pouvoir solidariser l'un ou l'autre des pignons (34, 35) avec l'arbre secondaire (33) et ainsi entraîner le pignon correspondant (14,13) de l'arbre principal (8), et
- un arbre d'entrée moteur (9) portant à son extrémité un moyeu terminal (38) en prise avec un moyeu d'entrée (37) solidaire en rotation de l'arbre secondaire (33), caractérisée
- en ce que ledit arbre principal creux (8) contient ledit arbre d'entrée moteur (9) librement rotatif par rapport à l'arbre principal creux et porte à son extrémité un pignon terminal (38) en prise avec un pignon d'entrée (37) solidaire en rotation avec l'arbre secondaire (33), et
- en ce que ledit arbre d'entrée moteur (9) et ainsi le moteur est transversal par rapport à l'axe longitudinal du véhicule.

2. Boîte de vitesses selon la revendication 1, caractérisée en ce que le pignon (21) de la dernière vitesse de l'arbre de sortie (22) coopère avec un synchroniseur coiffé par une fourchette (43) à section en U, disposée en regard du pignon terminal (38) de l'arbre d'entrée moteur (9).

## Patentansprüche

1. Getriebe (7) für ein Fahrzeug mit Motorfrontantrieb, das folgendes aufweist:
- eine hohle Hauptwelle (8), die den einzelnen Gängen entsprechende Zahnräder (10-15) trägt,
- eine Ausgangswelle (22), auf der Zahnräder (16-19, 21) drehbar montiert sind, die mit den Zahnrädern der Hauptwelle ständig in Eingriff stehen, sowie Synchronisiereinrichtungen (25, 26, 44), die die feste Verbindung eines dieser Zahnräder mit der Ausgangswelle gestatten,
- ein Untersetzungsgetriebe (32) mit mindestens zwei Zahnrädern (34, 35), die auf einer zur Hauptwelle (8) parallelen Nebenwelle (33) drehbar montiert sind und entsprechend den verschiedenen Übersetzungsverhältnissen, die mit unterschiedlichen Geschwindigkeitsbereichen korrespondieren, mit zugeordneten Zahnrädern (14, 13) der Hauptwelle (8) in Eingriff stehen, und eine Synchronsiereinrichtung (36), die auf der Nebenwelle zwischen diese Zahnräder (34, 35) eingesetzt ist und das eine oder das andere Zahnrad (34, 35) mit der Nebenwelle verbinden und dadurch das entsprechende Zahnrad (14, 13) der Hauptwelle (8) antreiben kann, und
- eine antreibende Eingangswelle (9), die an ihrem Ende eine Endnabe (38) trägt, die mit einer mit der Nebenwelle (33) drehfest verbundenen Eingangsnabe (37) in Eingriff ist,
dadurch gekennzeichnet,
- daß die hohle Hauptwelle (8) die in Bezug auf sie frei drehbare antreibende Eingangswelle (9) enthält, die an ihrem Ende ein Endzahnrad (38) trägt, das mit einem mit der Nebenwelle (33) drehfest verbundenen Eingangszahnrad (37) in Eingriff steht und
- daß die antreibende Eingangswelle (9) und damit der Motor sich quer zur Längsachse des Fahrzeugs erstrecken.

2. Getriebe nach Anspruch 1, dadurch gekennzeichnet, daß das dem letzten Gang entsprechende Zahnrad (21) der Ausgangswelle (22) mit einer Synchronisiereinrichtung zusammenwirkt, über welche ein Bügel (43) mit U-förmigem Querschnitt greift, der gegenüber dem Endzahnrad (38) der antreibenden Eingangswelle (9) angeordnet ist.

## Claims

1. Gearbox (7) for a front drive vehicle equipped with an engine comprising:
- a main drive shaft (8) bearing pinions (10-15) and coordinating with different speeds, said main drive shaft being hollow,
- an output shaft (22) on which pinions (16-19, 21) are movably mounted which always engage with the pinions of the main drive shaft, as well as synchromesh devices (25, 26, 44) which enable one of these pinions to intermesh with the output shaft,
- a reduction gear (32) with at least two pinions (34, 35) movably mounted on a secondary shaft (33) parallel to the main drive shaft (8) engaging with associated pinions (14, 13) of the main drive shaft (8) in keeping with different ratios corresponding to different speed ranges, and a synchromesh device (36) disposed between these pinions (34, 35) on the secondary shaft to permit one of the pinions (34, 35) to intermesh with the secondary shaft (33) and thus drive the corresponding pinion (14, 13) of the main drive shaft (8), and
- a drive shaft (9) bearing an end pinion (38) at its end which engages with a drive pinion (37) integrally rotatable with the secondary shaft (33), characterised in that
- said hollow main drive shaft (8) contains said drive shaft (9) which is freely rotatable relative to the hollow main drive shaft and at its end has an end pinion (38) engaging with a drive pinion (37) integrally rotatable with the secondary shaft (33), and
that said drive shaft (9), and therefore the engine, is arranged transversely relative to the longitudinal axis of the vehicle.

2. Gearbox according to Claim 1, characterised in that the pinion (21) of the last speed of the output shaft (22) cooperates with a synchromesh device covered by a selector fork (43) with a U-shaped cross-section arranged to face the end pinion (38) of the drive shaft (9).
